# EUROPEAN PATENT APPLICATION

(11) **EP 4 145 590 A1**
(43) Date of publication of application: **08.03.2023**
(21) Application number: 21838023.6
(22) Date of filing: 29.06.2021
(51) Int. Cl.: H01M 10/54, C01G 53/00, C22B 7/00, H01M 4/131, H01M 4/36

(54) **METHOD FOR REUSING ACTIVE MATERIAL BY USING POSITIVE ELECTRODE SCRAP**

(30) Priority: 06.07.2020 KR 20200082622
(71) Applicant: LG Energy Solution, Ltd., Seoul 07335 (KR)
(72) Inventor: KIM, Min-Seo, Daejeon 34122 (KR); PARK, Se-Ho, Daejeon 34122 (KR); YANG, Doo-Kyung, Daejeon 34122 (KR)
(74) Representative: Hoffmann Eitle
(86) International application number: PCT/KR2021/008205
(87) International publication number: WO 2022/010161

(57) **Abstract**

A method of recovering an active material from a positive electrode scrap and reusing the active material is provided. The positive electrode active material reuse method includes (a) by thermally decomposing a binder and a conductive material in an active material layer by performing heat treatment on a positive electrode scrap including a lithium composite transition metal oxide positive electrode active material layer on a current collector in air, separating the current collector from the active material layer and recovering an active material in the active material layer; (b) washing the recovered active material with a cleaning solution; and (c) obtaining a reusable active material by adding a lithium precursor to the washed active material and annealing the active material, wherein a molar ratio of lithium to other metals in the active material after heat treatment or a molar ratio of lithium to other metals in the active material after washing has a decrease range within 20% compared to a molar ratio of lithium to other metals in the positive electrode scrap before heat treatment.

## Description

### TECHNICAL FIELD

The present disclosure relates to a method of recycling resources when manufacturing a lithium secondary battery. In particular, the present disclosure relates to a method of recovering and reusing a positive electrode active material from a positive electrode scrap generated in a lithium secondary battery manufacturing process or from a lithium secondary battery that is discarded after use. The present application claims priority to Korean Patent Application No. 10-2020-0082622 filed on July 06, 2020 in the Republic of Korea, the disclosure of which is incorporated herein by reference.

### BACKGROUND ART

Lithium secondary batteries which may be repeatedly charged and discharged are in the spotlight as an alternative to fossil energy. Lithium secondary batteries have been mainly used in traditional handheld devices such as cell phones, video cameras, and power tools. However, recently, application fields of lithium secondary batteries have been gradually increasing to electric vehicles (EVs, HEVs, and PHEVs), large capacity energy storage systems (ESSs), uninterruptible power supply systems (UPS), etc.

A lithium secondary battery includes an electrode assembly in which unit cells having a structure in which a positive electrode plate and a negative electrode plate coated with an active material on a current collector are arranged with a separator interposed therebetween, and an exterior material sealing and accommodating the electrode assembly together with an electrolyte, that is, a battery case. The positive electrode active material of the lithium secondary battery mainly uses a lithium-based oxide, and the negative electrode active material uses a carbon material. The lithium-based oxide contains a metal such as cobalt, nickel, or manganese. In particular, cobalt, nickel, and manganese are very expensive valuable metals. Among these, cobalt is a strategic metal, and each country in the world has a special interest in supply and demand of cobalt. Since the number of cobalt producing countries is limited, it is known as a metal whose supply and demand is unstable worldwide. If an imbalance in the supply and demand of raw materials of strategic metals occurs, raw material prices are highly likely to rise.

Conventionally, research on recovering and recycling these valuable metals from lithium secondary batteries (waste batteries) which are discarded when their lifespan is completed after use has been mainly conducted. In addition to waste batteries, it is more preferable if resources may be recovered from wastes discarded after the positive electrode plate is punched or from the positive electrode in which a defects occur during the process.

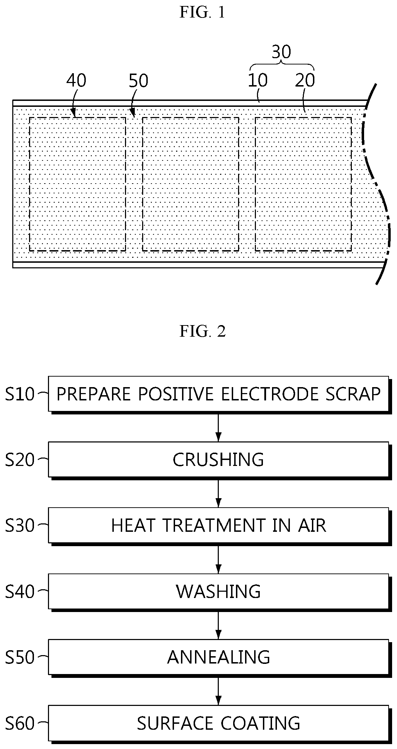

Currently, when manufacturing a lithium secondary battery, as shown in FIG. 1, a positive electrode sheet 30 is manufactured by forming a positive electrode active material layer 20 in which a long sheet type positive electrode current collector 10 such as aluminum (Al) foil is coated with a positive electrode slurry in which a positive electrode active material, a conductive material, a binder, a solvent, etc. are mixed, and then a positive electrode plate 40 is punched to a certain size. A part remaining after punching is discarded as a positive electrode scrap 50. If it is possible to recover the positive electrode active material from the positive electrode scrap 50 and reuse the positive electrode active material, it would be very desirable from an industrial-economic point of view and an environmental point of view.

Conventionally, in most cases, a method of recovering the positive active material dissolves a positive electrode in hydrochloric acid, sulfuric acid, nitric acid, etc., and then extracting an active material element such as cobalt, nickel, manganese, etc., and reuses the active material element as a raw material for the synthesis of the positive active material. However, the method of extracting the active material element using an acid has disadvantages in that a process of or recovering pure raw materials is not environmentally friendly as well as requires a neutralization process and a wastewater treatment process, which increases the process cost. In addition, the method has a disadvantage in that lithium, which is one of the main elements of the positive electrode active material, may not be recovered. In order to solve these disadvantages, a method of directly reusing the active material without dissolving the positive electrode active material and extracting the active material in element form is required.

Furthermore, a method of maximally preventing the loss of constituent elements such as lithium during the process of obtaining a reuse active material is desirable. The loss of constituent elements such as lithium must be prevented as much as possible so as not to be significantly different from the composition of a fresh active material that has never been used. By doing so, a process of adding insufficient components may be minimized.

### DISCLOSURE

### Technical Problem

The present disclosure is designed to solve the problems of the related art, and therefore the present disclosure is directed to providing a method of recovering and reusing an active material from a positive electrode scrap.

### Technical Solution

In one aspect of the present disclosure, there is provided a positive electrode active material reuse method including (a) by thermally decomposing a binder and a conductive material in an active material layer by performing heat treatment in air on a positive electrode scrap including a lithium composite transition metal oxide positive electrode active material layer on a current collector, separating the current collector from the active material layer and recovering an active material in the active material layer, (b) washing the recovered active material with a cleaning solution, and (c) obtaining a reusable active material by adding a lithium precursor to the washed active material and annealing the active material, wherein a molar ratio of lithium to other metals in the active material after heat treatment or a molar ratio of lithium to other metals in the active material after washing has a decrease range within 20% compared to a molar ratio of lithium to other metals in the positive electrode scrap before heat treatment.

In the present disclosure, the positive electrode active material reuse method may further include (d) performing surface coating on the annealed active material.

Heat treatment may be performed at 300 to 650 °C, in particular, for 10 minutes to 24 hours.

Heat treatment may be performed at 550 °C as a temperature increase rate of 5 °C/min for 30 minutes.

The cleaning solution may be water. Alternatively, the cleaning solution may be a lithium compound aqueous solution showing basicity in an aqueous solution state. The lithium compound aqueous solution may be prepared to contain a lithium compound more than 0% and equal to or less than 15%, and preferably uses LiOH. The washing may be performed within one week, preferably within one day, and more preferably within one hour. Preferably, the cleaning solution in which a dissolving amount of LiF is 0.127g/100ml (18 °C) and 0.134g/100ml (25 °C) is used, and a ratio of the active material to the cleaning solution during washing is equal to or less than 1:200 and preferably 1:30 or more.

The washing may be performed by impregnating the recovered active material in the lithium compound aqueous solution and at the same time stirring the recovered active material.

The lithium precursor used in annealing may include at least one of LiOH, Li₂CO₃, LiNO₃ and Li₂O.

The lithium precursor is added by an amount that may be added as much as a ratio of lithium lost compared to a ratio of lithium to other metals in a raw material active material used in the active material layer.

For example, the lithium precursor may be added by an amount of lithium added at a molar ratio of 0.001 to 0.4.

Furthermore, the lithium precursor may be added by an amount of lithium that may be further added at a molar ratio of 0.0001 to 0.1 with respect to 1:1 that is a molar ratio of lithium to other metals. This additionally added lithium is used as a material of a surface protective layer in the performing of surface coating on the annealed active material.

For another example, without drying after the washing, the lithium precursor may be added in step (c) by mixing the washed active material in a lithium precursor solution and spray drying the active material. At this time, a temperature of the spray drying is preferably 100 to 300 °C.

The annealing may be performed at 400 to 1000 °C in the air.

A temperature of the annealing may exceed a melting point of the lithium precursor.

The active material in the active material layer may be recovered in powder form, and a carbon component generated by carbonization of the binder or the conductive material may not remain on a surface.

The performing of the surface coating may include coating at least one of a metal, an organic metal and a carbon component on a surface in a solid or liquid method and then performing heat treatment at 100 to 1200 °C.

The reusable active material may be represented by Chemical Formula 1 below,

LiₐNiₓMn_{y}Co_{z}M_{w}O_{2+δ}

(in Chemical Formula 1 above, M includes at least one selected from the group consisting of B, W, Al, Ti and Mg, 1<a≤1.1, 0≤x<0.95, 0≤y<0.8, 0≤ z<1.0, 0≤w≤0.1, - 0.02≤δ≤0.02, and x+y+z+w=1.)

The reusable active material may include a content of fluorine (F) equal to or less than 100 ppm.

### Advantageous Effects

According to the present disclosure, a waste positive electrode active material such as a positive electrode scrap generated during a manufacturing process of a lithium secondary battery may be reused without using an acid, and thus it is eco-friendly. The method according to the present disclosure does not require a neutralization process or a wastewater treatment process, thereby relaxing environmental issues and reducing process costs.

According to the present disclosure, the positive electrode active material may be recovered without an unrecoverable metal element. Since a current collector is not dissolved, the current collector may also be recovered. The method may directly reuse the active material recovered in powder form, rather than extracting an active material element and using the active material element as a raw material for synthesizing a positive electrode active material again, and thus it is economical.

According to the present disclosure, toxic and explosive solvents such as NMP, DMC, acetone, and methanol are not used, and thus it is safe, and simple processes such as heat treatment, washing, and annealing, etc., are used, and thus it is easy to manage process and is suitable for mass production.

According to the present disclosure, the electrochemical performance of the recovered active material does not deteriorate, and excellent resistance and capacity properties may be implemented.

In particular, according to the present disclosure, the loss of lithium in the active material may be minimized during a heat treatment process for separating the current collector and a washing process for surface modification, such as the removal of residues. The loss of lithium may be minimized by optimizing the heat treatment process as well as the amount of the current collector reacting with the active material or precipitating by heat treatment may be minimized. In addition, by adjusting the ratio between the active material and a cleaning solution in the washing process, the loss of lithium in the active material may be minimized while removing LiF which may act as a resistance if remains. Since the loss of lithium element is maximally prevented during the process of obtaining the reuse active material, the composition of a fresh active material is not significantly different from that of the reuse active material. Insufficient lithium is added through an additional lithium precursor addition process. In this regard, the amount of added lithium precursor is minimized, and thus it is preferable in terms of process and cost.

According to another aspect of the present disclosure, since the active material to be reused may be granulated again through spray drying even if particles are broken due to rolling in the previous process, it is possible to improve a particle size and a specific surface area. In addition, if the washed active material is mixed with a lithium precursor solution and spray dried, since it is possible to supplement the lithium precursor while again granulating the active material simultaneously, there is an effect of process simplification, and there is an advantage in that a continuous process with the previous washing step is possible.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a positive electrode scrap discarded after a positive electrode plate is punched from a positive electrode sheet.
FIG. 2 is a flowchart of an active material reuse method according to the present disclosure.
FIG. 3 shows results of cell evaluation using active materials of embodiments and comparative examples.
FIGS. 4 and 5 are scanning electron microscope (SEM) pictures of samples and the active materials of an embodiment and comparative examples.
FIG. 6 is a graph of a particle size distribution of the active materials of samples and the active materials of an embodiment and comparative examples.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the following description, reference is made to the accompanying drawings, which form a part hereof. The illustrative embodiments described in the detailed description, drawings, and claims are not meant to be limiting. Other embodiments may be utilized, and other changes may be made, without departing from the sprit and scope of the subject matter presented herein. It will be readily understood that the aspects of the present disclosure, as generally described herein, and illustrated in the drawings, may be arranged, substituted, combined, separated, and designed in a wide variety of different configurations, all of which are explicitly contemplated herein.

Unless defined otherwise, all technical and scientific terms used herein generally have the same meaning as commonly understood by one of ordinary skill in the art to which the disclosure belongs.

The present disclosure is not to be limited in terms of the particular embodiments described in this application, which are intended as illustrations of various aspects. Many modifications and variations can be made without departing from its spirit and scope, as will be apparent to one of ordinary skill in the art. Functionally equivalent methods and apparatuses within the scope of the disclosure, in addition to those enumerated herein, will be apparent to one of ordinary skill in the art from the foregoing descriptions. Such modifications and variations are intended to fall within the scope of the appended claims. The present disclosure is to be limited only by the terms of the appended claims, along with the full scope of equivalents to which such claims are entitled. It is also to be understood that the terminology used herein is for the purpose of describing particular embodiments only, and is not intended to be limiting.

In the case of the conventional active material recycling process, the main purpose was to extract valuable metals (nickel, cobalt, manganese, etc.) as elements in the lithium secondary battery active material whose performance has deteriorated after use and resynthesize the active material, whereas, there is a difference in that the present disclosure recovers the active material from a positive electrode scrap generated during a lithium secondary battery manufacturing process.

Furthermore, in the case of the already known active material recycling process, a chemical method of extracting a valuable metal through acid/base dissolution or melting using reduction/additive, and manufacturing the valuable metal as a metal (a direct reduction method) or a resynthesized active material is added, which additionally incurs the complexity of process and the economic cost. However, the present disclosure relates to a method of directly reusing a positive electrode active material without dissolving the positive electrode active material.

In order to directly reuse the positive electrode active material, a method of removing a current collector from a positive electrode is required. To remove the current collector from the positive electrode, it is possible to remove a binder through high temperature heat treatment, to melt the binder using a solvent, to completely melt the current collector, to select the active material through dry grinding and sieving, etc.

The stability of the solvent is important in dissolving the binder using the solvent. Although NMP is the most efficient solvent, NMP has the disadvantages of toxicity and high price. In addition, there is a disadvantage that a solvent recovery process such as reprocessing a waste solvent is required. Melting the current collector may be cheaper than using the solvent. However, since it is difficult to remove foreign substances from the surface of the reuse active material and hydrogen gas is generated during a current collector removal process, there is a risk of explosion. It is difficult to completely separate the current collector and the active material by dry grinding and sieving. Since the particle size distribution of active materials is changed during a grinding process, and it is difficult to remove the binder, there is a disadvantage in that the properties of a reused battery deteriorate.

In the present disclosure, the active material and the current collector are separated by high temperature heat treatment. In particular, since heat treatment is performed in the air, a special apparatus configuration is not required, and since it is a relatively simple process that only needs heating, it is advantageous for mass production and commercialization. However, foreign substances should not remain on the surface of the reuse active material. In the present disclosure, even a step of removing foreign substances from the surface of the reuse active material is proposed.

Hereinafter, an active material reuse method according to an embodiment of the present disclosure is described with reference to FIG. 2. FIG. 2 is a flowchart of an active material reuse method according to the present disclosure.

Referring to FIG. 2, first, a discarded positive electrode scrap is prepared (step s 10).

As described above with reference to FIG. 1, the positive electrode scrap may be a part remained after manufacturing a positive electrode sheet including a lithium composite transition metal oxide positive electrode active material layer on a current collector and punching the positive electrode sheet. In addition, the positive electrode scrap may be prepared by collecting positive electrodes in which defects occur during a process. In addition, the positive electrode scrap may be prepared by separating a positive electrode from a discarded lithium secondary battery after use.

For example, a slurry manufactured by adding and mixing N-methyl pyrrolidone (NMP) to an active material that is a lithium cobalt oxide such as LiCoO₂(LCO), or an NCM-based active material including nickel (Ni), cobalt (Co) and manganese (Mn), carbon-based carbon black as a conductive material, and polyvinylidene fluoride (PVdF) that is a binder is coated on a sheet type current collector made of aluminum foil, and then, dried in a vacuum oven at about 120°C to manufacture a positive electrode sheet, and a positive electrode plate of a certain size is punched and the remaining positive electrode scrap may be prepared.

Lithium composite transition metal oxides are used as the positive electrode active material of a lithium secondary battery, and among these, lithium cobalt oxide of LiCoO₂, lithium manganese oxide (LiMnO₂ or LiMn₂O₄, etc.), lithium iron phosphate compound (LiFePO₄, etc.) or lithium nickel oxide (LiNiO₂, etc.) are mainly used. In addition, as a method of improving a low thermal stability while maintaining an excellent reversible capacity of LiNiO₂, a nickel manganese-based lithium composite metal oxide in which a part of nickel (Ni) is substituted with manganese (Mn) having excellent thermal stability and an NCM-based lithium composite transition metal oxide in which a part of nickel (Ni) is substituted with manganese (Mn) and cobalt (Co) are used. In the present disclosure, in particular, the reuse of the NCM-based lithium composite transition metal oxide active material is proposed.

As described above, the positive electrode scrap has an active material layer on a current collector of a metal foil such as aluminum foil. The active material layer is formed by coating a slurry in which an active material, a conductive material, a binder, a solvent, etc. are mixed, and has a structure in which the binder connects the active material and the conductive material after the solvent is volatilized. Therefore, if the binder is removed, the active material may be separated from the current collector.

Next, the positive electrode scrap is crushed to an appropriate size (step s20). Crushing refers to cutting or shredding of the positive electrode scrap into pieces of suitable and easy-to-handle size. After crushed, the positive electrode scrap is cut into small pieces, for example, 1 cm x 1 cm. For crushing, various dry grinding equipment such as hand-mill, pin-mill, disk-mill, cutting-mill and hammer-mill may be used, or a high speed cutter may be used.

Crushing may be performed in consideration of the characteristics required in the equipment used in the handling of the positive electrode scrap and subsequent processes. For example, in the case of using equipment that requires continuous processing in loading and unloading the positive electrode scrap, the fluidity of the positive electrode scrap must be good, and thus too large positive electrode scrap must be crushed.

Now, the positive electrode scrap is heat treated in the air (step s30).

In the present disclosure, heat treatment is performed to thermally decompose the binder in the active material layer. At this time, it is preferable that a molar ratio of lithium to other metals in the active material after heat treatment has a decrease range within 20% compared to a molar ratio of lithium to other metals in the active material in the positive electrode scrap before heat treatment. More preferably, a decrease range within 10% may be good. If the malar ratio has a decrease greater than 20%, an amount of materials to be additionally supplemented, such as a lithium precursor, increases, which is undesirable. If the decrease is within 10%, it is possible to minimize the amount of added lithium precursor. If the malar ratio has a decrease close to 0%, there is no need to add a lithium precursor, but since an unavoidable loss of lithium occurs during heat treatment, it is difficult to achieve the decrease close to 0%. In the present disclosure, the decrease may be within 20%, more preferably within 10%, and most preferably within 3% by optimizing heat treatment conditions (see Experimental Example 1).

To this end, heat treatment may be performed at 300 to 650 °C, which may be called high temperature heat treatment. At a temperature less than 300 °C, it is difficult to remove the binder, which causes a problem that the current collector may not be separated. At a temperature equal to or greater than 650 °C, the current collector melts (Al melting point: 660 °C), which causes a phenomenon that the current collector may not be separated.

A heat treatment time is maintained so that the binder may be sufficiently thermally decomposed. For example, the heat treatment time is maintained for 10 minutes to 24 hours at the heat treatment temperature indicated above. Preferably, the heat treatment time is set to be equal to or greater than 30 minutes. The longer the heat treatment time, the longer the time for thermal decomposition of the binder to occur, but there is no difference in the thermal decomposition effect when the heat treatment time exceeds a certain time. Also, it is undesirable in terms of lithium reduction. If the heat treatment time is set to 10 minutes to 24 hours, the molar ratio of lithium to other metals in the active material after heat treatment may have a decrease range within 20% compared to the molar ratio of lithium to other metals in the active material in the positive electrode scrap before heat treatment. Heat treatment equipment may be various types of furnaces. For example, the heat treatment equipment may be a box type furnace or a rotary kiln capable of continuous processing in consideration of productivity.

After heat treatment, the positive electrode scrap may be slowly cooled or rapidly cooled in the atmosphere.

For example, heat treatment may be performed at 550 °C for 30 minutes at a temperature rise rate of 5 °C/min. The temperature rise rate may be implemented without difficulty, for example, in a box type furnace and may be heated without generating a thermal shock, etc. to the positive electrode scrap. 550 °C is to allow the thermal decomposition of the binder to occur well while considering the melting point of the Al current collector. At this temperature, since heat treatment for less than 10 minutes is insufficient for thermal decomposition, heat treatment should be performed for more than 10 minutes, and for more than 30 minutes if possible.

As the binder and the conductive material in the active material layer are thermally decomposed through heat treatment in the air and become CO₂ and H₂O and removed. Since the binder is removed, the active material is separated from the current collector, and the active material to be recovered may be selected in powder form. Accordingly, only in step s30, the current collector may be separated from the active material layer and the active material in the active material layer may be recovered.

It is important to perform heat treatment of step s30 in the air. If heat treatment is performed in a reducing gas or inert gas atmosphere, the binder and the conductive material are not thermally decomposed and only carbonized. When the binder and the conductive material are only carbonized, a carbon component remains on the surface of the active material, which degrades the performance of the reuse active material. When heat treatment is performed in the air, since a carbon material in the binder or the conductive material reacts with oxygen and is burned and removed as CO and CO₂ gases, both the binder and the conductive material are almost removed without remaining.

Therefore, according to the present disclosure, the active material is recovered in powder form, and the carbon component generated by carbonization of the binder or the conductive material may not remain on the surface thereof.

Next, the recovered active material is washed (step s40). Upon washing, a cleaning solution is used. The cleaning solution may simply be water. Alternatively, the cleaning solution may be a lithium compound aqueous solution. In particular, a lithium compound aqueous solution showing basicity in an aqueous solution state is preferable. This lithium compound aqueous solution is prepared to contain a lithium compound more than 0% and equal to or less than 15%, and preferably uses LiOH. The amount of LiOH is preferably equal to or less than 15%. The use of an excess of LiOH may leave an excess of LiOH on the surface of the active material even after washing, which may affect an annealing process in the future. In order to clean the surface of the active material in a pre-annealing step as much as possible, since an addition of the excess of LiOH is not good for the process, the addition is limited to equal to or less than 15%.

Washing may be performed by immersing the recovered active material in such an aqueous lithium compound solution. After immersion, washing may be performed within one week, preferably within one day, and more preferably within one hour. If washing is performed for more than one week, there is a risk of capacity degradation due to an excessive elution of lithium. A washing time may be determined in consideration of lithium dissipation. For example, in the case of a composition having a relatively high content of Ni in the NCM-based active material, since an amount of lithium dissipation increases as the washing time increases, it is better not to lengthen the washing time as much as possible. Therefore, it is preferable to set the washing time within one day or within one hour. In the case of a composition having a relatively low content of Ni, the lithium dissipation is relatively small if the washing time does not exceed one week. Therefore, it is good to perform washing within one week, preferably within one day, or within one hour. Washing includes immersing the active material in a cleaning solution such as a lithium compound aqueous solution showing basicity in an aqueous solution state, stirring the active material in an immersion state, etc. It is good to perform stirring with immersing as much as possible. If the active material is only immersed in the cleaning solution without stirring, the washing process may be slowly performed and may cause lithium leaching. Since the process time may be minimized if stirring is performed with immersing, it is preferable to proceed stirring simultaneously with impregnation of the cleaning solution. After washing, simply drying may be performed, or a spray drying step presented in another example below may be performed without drying. First, when drying is performed immediately after washing, drying may be performed in the air in a convection type oven after filtration.

The reason for washing is to remove LiF and metal fluoride which may be present on the surface of the recovered active material, and to perform surface modification. During heat treatment of step s30, the binder and the conductive material in the active material layer become CO₂ and H₂O and are vaporized and then removed. In this process, CO₂ and H₂O react with lithium on the surface of the active material to form Li₂CO₃ and LiOH, and fluorine (F) present in a binder such as PVdF reacts with a metal element constituting the positive electrode active material to form LiF or metal fluoride. If LiF or metal fluoride remains, battery properties deteriorate when the active material is reused. In the present disclosure, reactants that may have been generated on the surface of the reuse active material during heat treatment of step s30 are removed by adding washing of step s40, and thus foreign substances do not remain on the surface of a recycle active material.

In particular, it is more preferable to wash the active material with the lithium compound aqueous solution showing basicity in an aqueous solution state. If an aqueous solution of sulfuric acid or hydrochloric acid is used rather than the lithium compound aqueous solution showing basicity in the aqueous solution state, F on the surface of the active material may be washed, but the performance of the reuse positive electrode active material degrades by eluting transition metals (Co and Mg) present in the active material. The lithium compound aqueous solution showing basicity in the aqueous solution state used in the present disclosure is very desirable because the lithium compound aqueous solution may remove the binder that is likely to remain in a trace amount even after the thermal decomposition of step s30 as well as may supplement the amount of lithium that may be eluted in the washing process without eluting the transition metal, etc. present in the active material.

In step s40, in particular, it is preferable that a molar ratio of lithium to other metals in the active material after washing has a decrease range within 20% compared to a molar ratio of lithium to other metals in the active material in the positive electrode scrap before heat treatment. More preferably, a decrease range within 10% may be good. If the malar ratio has a decrease greater than 20%, an amount of materials to be additionally supplemented, such as a lithium precursor, increases, which is undesirable. If the decrease is within 10%, it is possible to minimize the amount of added lithium precursor. If the malar ratio has a decrease close to 0%, there is no need to add a lithium precursor, but since the unavoidable loss of lithium occurs during washing for removal of LiF, it is difficult to achieve the decrease close to 0%. In the present disclosure, the decrease may be within 20%, more preferably within 10%, and most preferably within 9% by optimizing conditions of washing (see Experimental Example 1).

To this end, the cleaning solution in which a dissolving amount of LiF is 0.127g/100ml (18°C) and 0.134g/100ml (25°C) is used, and it is preferable that a ratio of the active material to the cleaning solution during washing is equal to or less than 1:200. A cleaning solution having the dissolving amount of LiF different from the dissolving amount presented herein may be used, or the ratio of the active material to the cleaning solution may be equal to or greater than 1:30. If the ratio of the cleaning solution and the active material is different from the ratio presented herein, lithium dissolution occurs severely.

Through step s40, in the present disclosure, it is possible to adjust the content of LiF on the surface of the recovered active material to less than 500 ppm, through which the capacity improvement effect may be achieved. Preferably, the content of F may be set to be equal to or less than 100 ppm. More preferably, the content of F may be set to be equal to or less than 30 ppm. As described above, through washing, LiF or a lithium metal compound formed by decomposition of the binder is removed, and thus electrical resistance properties may be improved.

Next, a lithium precursor is added to the washed active material and annealed (step s50).

Although the loss of lithium in the active material intends to be minimized during previous steps s30 and s40, the unavoidable loss of lithium may occur. In step s50, such loss of lithium is compensated. The lithium precursor may be added in a solid or liquid phase. The lithium precursor used for an annealing process may be any one or more of LiOH, Li₂CO₃, LiNO₃, and Li₂O.

To mix a solid lithium precursor, drying is performed after step s40, and then material mixing is performed, and in this case, a powder mixing or milling process is used.

To mix a liquid lithium precursor, it is preferable to mix the washed active material with the lithium precursor solution without drying after step s40 and spray dry the lithium precursor solution. As the lithium precursor solution, a lithium compound soluble in an aqueous solution or an organic solvent may be used. The temperature of the spray drying step may be 100 to 300 °C. It is preferable that the minimum temperature is equal to or greater than 80°C. This is because when the minimum temperature is equal to or less than 80°C, a problem in which the solution is not completely dried may occur. More preferably, when the minimum temperature is equal to or greater than 100°C, the solution may be completely dried.

During spray drying, as the lithium precursor solution is dried immediately after spraying, the lithium precursor component is coated or contacted on the surface of the active material. In this regard, there is also an advantage in that particles are agglomerated by a capillary force when drying the lithium precursor solution which is a solvent, and the particles are adjusted. In the case of a positive electrode scrap made of an electrode, the particles on the surface may be pressed and cracked or broken by the rolling process. In particular, compared to LCO, the NCM-based active material has high particle splitting due to rolling during formation of the electrode. Compared to a fresh active material, since the recovered active material includes many small particles, there is a problem of non-uniformity in the particles. In particular, the NCM-based active material including large particles that are secondarily granulated by gathering primary particles having a size of several tens to hundreds of nm is used. In a process of rolling a positive electrode made of such an active material so as to adjust the porosity in the electrode, secondary particles are split to be primarily granulated or smaller particles that have larger sizes than that of the secondary particles but are smaller than large particles. Since the specific surface area of the active material increases as the number of particles broken by rolling increases, in the case of a reuse active material obtained from the rolled electrode, there may be problems that may affect slurry properties, electrode adhesion, and electrode performance when reused.

In order for the active material to be at a reusable level, it is desirable that the particle size distribution should not be different from that of the fresh active material. Since spray drying may recover large particles by aggregating small particles that are split during rolling, spray drying may solve the non-uniformity in the particles and also make a particle size close to the initial characteristics of the fresh active material. In particular, the effect is excellent in the NCM-based active material which has severe particle breakage during the rolling of the previous process.

As such, when spray drying is used, the lithium precursor is coated on the surface of the active material, and the active material is obtained by adjusting the particles. Since the addition of the lithium precursor, granulation, and drying are performed in one step, there is an effect of simplifying the process. Since the active material particles washed in step s40 are merely mixed and dispersed in a lithium precursor solution of a certain concentration and then spray dried, there is an advantage that a continuous process is possible for washing in step s40 and addition of the lithium precursor in step s50.

In step s50, the properties of the reuse active material are restored or improved to the level of a fresh active material that has never been used by restoring a crystal structure of the active material through annealing. Through the previous steps s30 and s40, a deformed structure may appear on the surface of the active material. For example, in the active material which is an NCM-based lithium composite transition metal oxide, in step s40, a spinel structure in which Ni is rock salted [NiCO₃·2Ni(OH)₂)H₂O] by moisture may be formed. If a battery is manufactured as it is, battery properties such as capacity reduction may deteriorate. In the present disclosure, the crystal structure is restored through step s50. For example, the active material which is the NCM-based lithium composite transition metal oxide is restored to a hexagonal structure again. Accordingly, it is possible to restore or improve the initial properties of the active material to a level similar to that of the fresh active material.

Furthermore, in the case of an LCO active material, Co₃O₄ may be generated by thermal decomposition on the surface. If a battery including Co₃O₄ is manufactured, battery properties may deteriorate. In the present disclosure, the initial properties of the active material may be restored or improved to the level similar to that of the fresh active material by restoring the crystal structure and removing Co₃O₄ through step s50.

The lithium precursor is added before annealing by an amount that may be added as much as a ratio of lithium lost compared to a ratio of lithium to other metals in the raw material active material (i.e., a fresh active material) used in the active material layer. For example, when the ratio of lithium to other metals in the fresh active material is 1, the lithium precursor may be added by an amount of lithium that may be added at a molar ratio of 0.001 to 0.4. An amount of lithium at a molar ratio of 0.01 to 0.2 is properly added. The addition of an excess amount of lithium precursor other than the amount of lithium lost through washing, etc. causes an unreacted lithium precursor to remain in the reuse active material, which serves to increase resistance in an active material reuse process, and thus it is necessary to administer an appropriate amount of the lithium precursor.

In addition, the lithium precursor is preferably added by an amount of lithium that may be further added at a molar ratio of 0.0001 to 0.1 with respect to 1:1 that is a molar ratio of lithium to other metals. The reason for adding the excess lithium as described above is to form a surface protective layer by surface coating on the active material, which will be further described below. In the case of manufacturing a secondary battery using such an active material, it is possible to maintain a lifespan characteristic while suppressing a side reaction caused by an electrolyte.

Annealing may be performed at 400 to 1000 °C in the air. An annealing temperature may be 600 to 900 °C. This temperature should be changed within a limited range depending on a type of the lithium precursor. It is preferable to set the annealing time to be equal to or greater than one hour. Preferably, the annealing time is about 5 hours. If the annealing time is long, the crystal structure may be sufficiently recovered, but even if the annealing time is a long time, the performance of the active material is not significantly affected. The annealing time is, for example, within 15 hours. Annealing equipment may use the same or similar equipment as in heat treatment of step s30.

For example, when Li₂CO₃ is used as a lithium precursor, the annealing temperature is preferably 700 to 900 °C, more preferably 710 to 780 °C. This is because the melting point of Li₂CO₃ is 723 °C. Most preferably, annealing is performed at 750 °C. In the case of using LiOH as a lithium precursor, the annealing temperature is preferably 400 to 600 °C, more preferably 450 to 480 °C. This is because the melting point of LiOH is 462 °C.

The annealing temperature is preferably a temperature exceeding the melting point of the lithium precursor. However, at a temperature exceeding 1000 °C, thermal decomposition of the positive electrode active material occurs and the performance of the active material deteriorates, and thus the temperature should not exceed 1000 °C.

Through this step s50, a reusable active material may be obtained.

Next, as a selective step, step s60 may be further performed. In step s60, surface coating is applied to the active material annealed in step s50.

The surface coating step may be coating at least one of metal, organic metal and a carbon component on the surface in a solid or liquid manner and then heat treating the coated one at 100 to 1200 °C. When heat treatment is performed at a temperature exceeding 1200 °C, there is a risk of performance degradation due to thermal decomposition of the positive electrode active material. In the surface coating step, coating on the surface in the solid or liquid manner may use methods such as mixing, milling, spray drying, grinding, etc.

A surface protective layer is formed by a heterogeneous metal through surface coating. When a molar ratio of lithium to other metals in the positive electrode active material is 1: 1 by supplementing the lost lithium, if the lithium in the active material reacts with a surface coating material, and the molar ratio of lithium to other metals in the positive electrode active material decreases to less than 1:1, 100% capacity expression may not be achieved. Therefore, insufficient lithium is added in the previous step s50 so that not only the molar ratio of lithium to other metals in the positive electrode active material is 1:1 but also further an excess of lithium is added to include more lithium by a molar ratio of 0.0001 to 0.1 compared to other metals in the positive electrode active material. Then, during surface coating, the molar ratio of lithium to other metals in the positive electrode active material is 1:1, and the surface protective layer may be formed. Therefore, when even a process of forming the surface protective layer is performed, it is preferable to further add lithium to be used as a material of the surface protective layer in addition to simply adding the lost lithium in the process.

Specifically, when a metal oxide such as B, W, B-W, etc. coated on the active material and then heat treated, a lithium boron oxide layer may be formed on the surface of the active material and serves as the surface protective layer. The lithium that is more added at the molar ratio of 0.0001 to 0.1 in step s50 reacts with the metal oxide such as B, W, B-W, etc. in step s60, and the molar ratio of lithium to other metals in the positive electrode active material does not decrease to less than 1:1, and thus there is no capacity degradation.

The reusable active material obtained by the above-described method may be represented by the following chemical formula 1.

[Chemical Formula 1] LiₐNiₓMn_{y}Co_{z}M_{w}O_{2+δ}

(In Chemical Formula 1 above, M includes at least one selected from the group consisting of B, W, Al, Ti and Mg, 1<a≤1.1, 0≤x<0.95, 0≤y<0.8, 0≤ z<1.0, 0≤w≤0.1, - 0.02≤δ≤0.02, and x+y+z+w=1.)

The reusable active material may have a content of F equal to or less than 100 ppm. According to the present disclosure, since it is possible to recover an active material having a reduced content of F, if the active material having the reduced content of F is reused as an active material, excellent resistance properties and capacity properties may be implemented.

As described above, according to the present disclosure, the active material and the current collector are separated during heat treatment of step s30. By optimizing the heat treatment process temperature, time, etc., the molar ratio of lithium to other metals in the active material after heat treatment may have a decrease range within 20% compared to the molar ratio of lithium to other metals in the active material in the positive electrode scrap before heat treatment. For example, if the molar ratio of lithium to other metals in the active material in the positive electrode scrap before heat treatment is 1:1, the molar ratio of lithium to other metals in the active material after heat treatment has a value within 0.8:1. Then, the amount of lithium precursor to be added later may be minimized.

LiF or metal fluoride is removed during washing of step s40. Washing is safe and inexpensive, may remove LiF or metal fluoride without loss of other elements, and prevent elution of transition metals, etc. In particular, by optimizing conditions of the cleaning solution, the washing time, the ratio of the active material and the cleaning solution, etc., the molar ratio of lithium to other metals in the active material after washing may have a decrease range within 20% compared to the molar ratio of lithium to other metals in the active material in the positive electrode scrap before heat treatment. For example, if the molar ratio of lithium to other metals in the active material in the positive electrode scrap before heat treatment is 1:1, the molar ratio of lithium to other metals in the active material after washing has a value within 0.8:1. Then, the amount of lithium precursor to be added later may be minimized. If an aqueous solution of a lithium compound showing basicity in an aqueous solution is used as the cleaning solution during washing, there is also advantage of supplementing the loss of lithium occurring during the process.

As described above, according to the present disclosure, the loss of lithium in the active material may be minimized during a heat treatment process for separating the current collector and a washing process for surface modification, such as the removal of residues. The loss of lithium may be minimized by optimizing the heat treatment process as well as the amount of the current collector reacting with the active material or precipitating by heat treatment may be minimized. In addition, by adjusting the ratio between the active material and a cleaning solution in the washing process, the loss of lithium in the active material may be minimized while removing LiF which may act as a resistance if remains. Since the loss of lithium element is maximally prevented during the process of obtaining the reuse active material, the composition of a fresh active material is not significantly different from that of the reuse active material. Insufficient lithium is added through an additional lithium precursor addition process. In this regard, the amount of added lithium precursor is minimized, and thus it is preferable in terms of process and cost.

If spray drying is used to add a lithium precursor, since the active material to be reused may be granulated again through spray drying even if particles are broken due to rolling in the previous process, it is possible to improve a particle size and a specific surface area. In addition, if the cleaned active material is mixed with a lithium precursor solution and spray dried, since it is possible to supplement the lithium precursor while again granulating the active material simultaneously, there is an effect of process simplification, and there is an advantage in that a continuous process with the previous washing step is possible.

The annealing step after addition of the lithium precursor also has advantage of being safe and inexpensive, effectively removing Co₃O₄, and recovering the cell properties of the reuse active material by recovering the crystal structure, that is, by improving crystallinity.

The reusable active material obtained according to the present disclosure may have a particle size distribution similar to that of the fresh active material, and thus separate treatment for adjusting the particle size distribution may not be required. Since the carbon component generated by carbonization of the binder or the conductive material does not remain on the surface, a step for removing the carbon component, etc. is not required. Accordingly, the active material obtained through the method of FIG. 2 described above may be reused as it is without additional treatment and used to manufacture the positive electrode.

It is also possible to use 100% of the reuse active material as it is without adjusting the composition, or mix the reuse active material with a fresh active material and mix the reuse active material with a conductive material, a binder, and a solvent to make and use a slurry.

Hereinafter, experimental examples of the present disclosure are described in detail.

### <Experimental Examples>

### Experimental Example 1: Analysis of Molar Ratio of Lithium to Other Metals and Remaining Amount of F according to Heat Treatment Time for Separation of Current Collector

Each positive electrode active material was prepared using a method below, and the molar ratio of lithium to other metals and contents of F and Al according to the heat treatment time were measured. The heat treatment step in the air performed to separate the active material from the current collector was performed at a temperature equal to or less than 660 °C at which Al used as the current collector melts.

Sample 1: A fresh NCM-based lithium composite transition metal oxide was used, other than a reuse active material.

Sample 2: A positive electrode scrap to be discarded after punching a positive electrode plate having an NCM-based lithium composite transition metal oxide active material was prepared and heat treated at 500 °C in the air for 5 hours, and then the active material was collected. That is, in the active material reuse method of the present disclosure as described above, only up to heat treatment of step s30 is performed to remove the binder and the conductive material, separate the Al current collector, and collect the NCM-based lithium composite transition metal oxide active material. At this time, the positive electrode plate was manufactured from a slurry prepared by weighing 96.25 wt% of the positive active material, 1.5 wt% of carbon black that is a conductive material, and 2.25 wt% of PVdF (content of resin of 9.8 wt% with respect to PVdF 1100) that is a binder and mixing them with NMP.

Sample 3: A positive electrode scrap was prepared in the same manner as in Sample 2, heat treated at 600 °C in the air for 5 hours, and then the active material was collected. The heat treatment temperature is higher than that of Sample 2.

Sample 4: In the same manner as in Sample 2, a positive electrode scrap was prepared and heat treated at 550 °C in the air for 30 minutes, and then the active material was collected. Although the heat treatment temperature is higher than that of Sample 2, the heat treatment time is shorter.

Sample 5: In addition to Sample 4, an active material washed for 10 minutes according to the washing step s40 of the active material reuse method of the present disclosure was used. The cleaning solution was prepared and used as an aqueous solution including or excluding LiOH. The cleaning solution in which a dissolving amount of LiF is 0.127g/100ml (18°C) and 0.134g/100ml (25°C) was used. The active material was washed at a washing ratio in which the active material to the cleaning solution is 1:30 with respect to 5 g of the positive active material.

It is important to reduce the remaining amount of F because during heat treatment the remaining F decomposed in the binder reacts with Li ions in the active material to form LiF which may act as a resistance. The characteristics according to the heat treatment temperature and time were observed by measuring the content of F by ICP, and the experimental results were summarized in Table 1.

**[Table 1]**

| | Conditions | Molar Ratio of Lithium to Other Metals | Content of F (ppm) | Content of Al (ppm) |
|---|---|---|---|---|
| Sample 1 | Fresh active material | 1.03 | ND | 50 |
| Sample 2 | Heat treatment at 500 °C for 5 hours | 1 | 1835 | 195 |
| Sample 3 | Heat treatment at 600 °C for 5 hours | 0.97 | 1020 | 350 |
| Sample 4 | Heat treatment at 550 °C for 30 minutes | 1 | 1880 | 190 |
| Sample 5 | Washing for 10 minutes after Heat treatment at 550 °C for 30 minutes | 0.94 | 85 | 145 |

ND means that the content of F equal to or less than 30 ppm is measured. The unit of content is ppm which means mg/kg.

Sample 3 has a higher heat treatment temperature than that of Sample 2, and the remaining amount of F is less than that of Sample 2, but the molar ratio of lithium to other metals decreases and the Al current collector component is 350 ppm which is higher than that of Sample 2. It may be seen that a high heat treatment temperature is not always good. It may be seen from Sample 2 and Sample 3 that the molar ratio of lithium to other metals in the positive electrode active material is affected as the heat treatment temperature rises. Therefore, it is preferable to use an appropriate heat treatment temperature as proposed in the present disclosure.

Sample 4 has a higher heat treatment temperature than that of Sample 2, but has a reduced heat treatment time. Even if the heat treatment temperature rises as shown, when the heat treatment time is reduced, there was no change in the molar ratio of lithium to other metals. In Sample 4, it may be seen that the molar ratio of lithium to other metals and the residual amount of F are maintained at the same performance as in Sample 2, and a component of the Al current collector is also maintained at the same level.

Up to the washing step was performed on Sample 5 compared to Sample 4. The remaining amounts of F and Al decreased by washing, and in particular, the remaining amount of F remarkably decreased. However, compared to Sample 4, the molar ratio of lithium to other metals decreased. The molar ratio of lithium to other metals in Sample 5 is 0.94, which has a decrease range within 10% compared to the molar ratio (1.03 if it may be considered to be similar to Comparative Example 1) of lithium to other metals in the active material in the positive electrode scrap before heat treatment. This degree of decrease is enough to easily supplement the insufficient lithium by adding a lithium precursor later. Therefore, it may be concluded that the heat treatment conditions of Samples 4 and 5 are preferable even considering the loss of lithium due to washing in Sample 5. The molar ratio of lithium to other metals of Sample 4 is 1, which has a decrease range within 3% compared to the molar ratio (1.03 if it may be considered to be similar to Comparative Example 1) of lithium to other metals in the active material in the positive electrode scrap before heat treatment. As such, it may be seen that the decrease range within 3% in the heat treatment step (Sample 4) results in a decrease range within 10% when proceeding to washing. Considering that more loss of lithium occurs after washing, the loss of lithium in the heat treatment step which is the previous step should also be managed. Therefore, in the present disclosure, the molar ratio of lithium to other metals before and after heat treatment needs to have a decrease range within 20%. The reason is that, when the washing step is performed as in Sample 5, lithium ions are released by the cleaning solution, which causes more loss of lithium. Therefore, it is preferable to manage and control the decrease in the molar ratio of lithium to other metals even in the heat treatment step before the washing step as in the present disclosure.

### Experimental Example 2: Analysis of Molar Ratio of Lithium to Other Metals and Remaining Amount of F according to Washing Time

While samples were prepared in the same manner as the sample preparation method above, samples with changed washing time were further prepared, and the molar ratio of lithium to other metals and the content of F according to the washing time were measured.

Sample 6: up to the washing step was performed in the same manner as in Sample 5, and the washing time was 1 hour which was increased compared to Sample 5.

Sample 7: up to the washing step was performed in the same manner as in Sample 5, and the washing time was 24 hours which was further increased compared to Sample 5.

The experimental results are summarized in Table 2.

**[Table 2]**

| | Conditions | Molar Ratio of Lithium to Other Metals | Content of F (ppm) |
|---|---|---|---|
| Sample 1 | Fresh active material | 1.03 | ND |
| Sample 4 | Heat treatment at 550 °C for 30 minutes | 1 | 1880 |
| Sample 5 | Washing for 10 minutes after Heat treatment at 550 °C for 30 minutes | 0.94 | 85 |
| Sample 6 | Washing for 1 hour after Heat treatment at 550 °C for 30 minutes | 0.94 | 60 |
| Sample 7 | Washing for 24 hours after Heat treatment at 550 °C for 30 minutes | 0.94 | 65 |

It was confirmed that the molar ratio of lithium to other metals according to the washing time does not show a significant difference in Samples 5, 6, and 7. In addition, the F component also shows a similar result that is within 100ppm. For comparison, an excessive dissolution of lithium occurred in the active material immersed in the cleaning solution for more than one week. Therefore, as in Samples 5 to 7, it is better to perform washing within one day, more preferably within one hour.

### Experimental Example 3: Analysis 1 of Molar Ratio of Lithium to Other Metals and Remaining Amount of F according to Washing Ratio

While samples were prepared in the same manner as the sample preparation method above, samples with changed washing ratios of the active material to the cleaning solution were further prepared, and the molar ratio of lithium to other metals and the content of F according to the washing ratio were measured. Samples 8 to 12 below were washed in the same manner as Sample 5 except for the washing ratio.

Sample 8: cleaned at the 1:1 ratio of the active material to the cleaning solution.

Sample 9: cleaned at the 1:3 ratio of the active material to the cleaning solution.

Sample 10: cleaned at the 1:5 ratio of the active material to the cleaning solution.

Sample 11: cleaned at the 1:10 ratio of the active material to the cleaning solution.

Sample 12: cleaned at the 1:100 ratio of the active material to the cleaning solution.

Sample 13: cleaned at the 1:200 ratio of the active material to the cleaning solution.

The experimental results are summarized in Table 3.

**[Table 3]**

| | Conditions | Molar Ratio of Lithium to Other Metals | Content of F (ppm) |
|---|---|---|---|
| Sample 1 | Fresh active material | 1.03 | ND |
| Sample 4 | Heat treatment at 550 °C for 30 minutes | 1 | 1880 |
| Sample 8 | Washing for 10 minutes after Heat treatment at 550 °C for 30 minutes washing ratio 1:1 | 0.98 | 1375 |
| Sample 9 | Washing for 10 minutes after Heat treatment at 550 °C for 30 minutes washing ratio 1:3 | 0.97 | 1230 |
| Sample 10 | Washing for 10 minutes after Heat treatment at 550 °C for 30 minutes washing ratio 1:5 | 0.97 | 910 |
| Sample 11 | Washing for 10 minutes after Heat treatment at 550 °C for 30 minutes washing ratio 1:10 | 0.95 | 400 |
| Sample 5 | Washing for 10 minutes after Heat treatment at 550 °C for 30 minutes washing ratio 1:30 | 0.94 | 85 |
| Sample 12 | Washing for 10 minutes after Heat treatment at 550 °C for 30 minutes washing ratio 1:100 | 0.92 | ND |
| Sample 13 | Washing for 10 minutes after Heat treatment at 550 °C for 30 minutes washing ratio 1:200 | 0.92 | ND |

It may be confirmed that in Table 2, all experiments were performed at the same washing ratio of 1:30, and there is little difference in the effect according to the washing time in Samples 5, 6, and 7, whereas in Table 3, the molar ratio of lithium to other metals are affected by the ratio of the active material and the cleaning solution and the remaining amount of F is also affected. When washing is performed, a decrease in lithium occurs compared to Sample 4 that is not washed, and as the washing ratio increases, that is, as the amount of the cleaning solution to the active material increases, the lithium further decreases. As the washing ratio increases, a desirable result is obtained in the remaining amount of F.

When the remaining amount of F is within 100ppm, since the effect on the electrode capacity is small, it may be seen from the viewpoint of the remaining amount of F that it is preferable to be greater than the washing ratio of 1:10 as in Sample 11, and it is advantageous to be equal to or greater than the washing ratio of 1:30 as in Sample 5. When the washing ratio is equal to or greater than 1:100 as in Samples 12 and 13, the molar ratio of lithium to other metals tends to converge to 0.92. Since there is no change even if the washing ratio is greater than 1:200, it may be seen that the washing ratio is preferably equal to or less than 1:200 from the viewpoint of the used amount of the cleaning solution and the cost thereof.

### Experimental Example 4: Analysis 2 of Molar Ratio of Lithium to Other Metals and Remaining Amount of F according to Washing Ratio

The same experiment as in Experimental Example 3 was performed with a positive electrode scrap different from the positive electrode scrap used in Experimental Examples 1 to 3 above.

The positive electrode scrap is discarded from a positive electrode plate manufactured from a slurry prepared by weighing 95 wt% of the positive active material, 1.2 wt% of carbon black that is a conductive material, and 3.7 wt% of PVdF (content of resin of 9.8 wt% with respect to PVdF 1100) that is a binder and mixing them with NMP. Compared to Experimental Examples 1 to 3, the positive electrode scrap used in Experimental Example 4 has a greater content of PVdF that is the binder.

Sample 14: An active material was collected in the same manner as in Sample 4, except that the positive electrode scrap is different.

Sample 15: An active material was collected in the same manner as in Sample 8, except that the positive electrode scrap is different.

Sample 16: An active material was collected in the same manner as in Sample 10, except that the positive electrode scrap is different.

Sample 17: An active material was collected in the same manner as in Sample 11, except that the positive electrode scrap is different.

Sample 18: An active material was collected in the same manner as in Sample 5, except that the positive electrode scrap is different.

Sample 19: An active material was collected in the same manner as in Sample 12, except that the positive electrode scrap is different.

Sample 20: An active material was collected in the same manner as in Sample 13, except that the positive electrode scrap is different.

Experimental results are summarized in Table 4.

**[Table 4]**

| | Conditions | Molar Ratio of Lithium to Other Metals | Content of F (ppm) |
|---|---|---|---|
| Sample 1 | Fresh active material | 1.03 | ND |
| Sample 14 | Heat treatment at 550 °C for 30 minutes | 1 | 3250 |
| Sample 15 | Washing for 10 minutes after Heat treatment at 550 °C for 30 minutes washing ratio 1:1 | 0.98 | 2700 |
| Sample 16 | Washing for 10 minutes after Heat treatment at 550 °C for 30 minutes washing ratio 1:5 | 0.97 | 1780 |
| Sample 17 | Washing for 10 minutes after Heat treatment at 550 °C for 30 minutes washing ratio 1:10 | 0.95 | 1050 |
| Sample 18 | Washing for 10 minutes after Heat treatment at 550 °C for 30 minutes washing ratio 1:30 | 0.94 | 260 |
| Sample 19 | Washing for 10 minutes after Heat treatment at 550 °C for 30 minutes washing ratio 1:100 | 0.92 | 50 |
| Sample 20 | Washing for 10 minutes after Heat treatment at 550 °C for 30 minutes washing ratio 1:200 | 0.92 | ND |

It may be seen that in the case of Table 2, there is little difference in the effect according to the time at the same washing ratio, whereas in the case of Table 4, the molar ratio of lithium to other metals is affected by the ratio of the active material and the cleaning solution, and the remaining amount of F is also affected as in Table 3.

It may be seen that Table 4 shows a case in which the content of the binder is increased compared to Table 3, and upon comparing Sample 8 and Sample 15, Sample 10 and Sample 16, etc. having the same washing ratio, the remaining amount of F is high in Table 4. The molar ratio of lithium to other metals tends to be similar.

It may be also seen that in Table 4, as in Table 3, when the remaining amount of F is within 100 ppm, since the effect on the electrode capacity is small, from the viewpoint of the remaining amount of F, a washing ratio greater than 1:30 as in Sample 18 is advantageous. When the washing ratio is equal to or greater than 1: 100 as in Samples 19 and 20, the molar ratio of lithium to other metals tends to converge to 0.92.

In the case of a secondary battery positive electrode, the electrode is manufactured with the content of the binder within approximately 3.7 wt% (content of resin of 9.8 wt% with respect to PVdF 1100). Table 4 shows that the content of the binder is increased compared to Table 3, and even in this case, F is removed within 100 ppm within a 1:200 ratio of the active material to the cleaning solution, and the molar ratio of lithium to other metals converges to 0.92. Since there is no change even if the washing ratio is greater than 1:200, it may be seen that the washing ratio is preferably equal to or less than 1:200, from the viewpoint of the amount of the cleaning solution used and the cost thereof.

From Tables 3 and 4 above, it was confirmed that the washing ratio is preferably equal to or greater than 1:30 and equal to or less than 1:200.

### Experimental Example 5: Comparison of capacity properties according to washing conditions and addition of lithium precursor

Each positive electrode active material was prepared using methods as in Embodiments and Comparative Examples below, a positive electrode was manufactured, then a cell (Coin Half Cell, CHC) was manufactured, and electrochemical performance thereof was evaluated.

Embodiment 1: Up to step s50 was further performed on Sample 5. With respect to the molar ratio of lithium to other metals in the raw material active material (ICP analysis), a lithium precursor (Li₂CO₃) of an amount by which lithium may be further added at a molar ratio of 0.05 during the process was administered and annealed at 750 °C for 15 hours. Theoretically, in the case of a fresh active material, the molar ratio of lithium to other metals is 1:1, but since an average error of ICP equipment that checks the molar ratio is ±0.05, preferably about ±0.02, the molar ratio of lithium to other metals of the raw material active material through ICP measurement may be 1±0.05:1. In the present experiment, the lithium precursor was added with respect to the analysis ratio through the ICP analysis.

Embodiment 2: Same as Embodiment 1, except that a lithium precursor of an amount by which lithium may be further added at a molar ratio of 0.1 during the process was administered and annealed. The amount of the lithium precursor is greater than in Embodiment 1.

Comparative Example 1: A fresh NCM-based lithium composite transition metal oxide was used as it was, other than a reuse active material. That is, Sample 1 was used.

Comparative Example 2: The active material of Sample 5 was used as it was. The active material on which only up to the washing step is performed was used.

Comparative Example 3: The active material of Sample 5 was annealed at 750 °C for 15 hours without adding a lithium precursor. That is, washing and annealing are performed, but the lithium precursor is not added.

Comparative Example 4: The active material of Sample 4 which was not washed was annealed at 750 °C for 15 hours by administering a lithium precursor of an amount by which lithium may be further added at a molar ratio of 0.1. In comparison with Comparative Example 3, this is an experimental example in which the effect of washing may be confirmed.

The positive electrode was manufactured from a slurry prepared by weighing 96.25 wt% of the positive active material recovered from or prepared in each of Embodiments and Comparative Examples above, 1.5 wt% of carbon black that is a conductive material, and 2.25 wt% of PVdF (content of resin of 9.8 wt% with respect to PVdF 1100) that is a binder and mixing them with NMP.

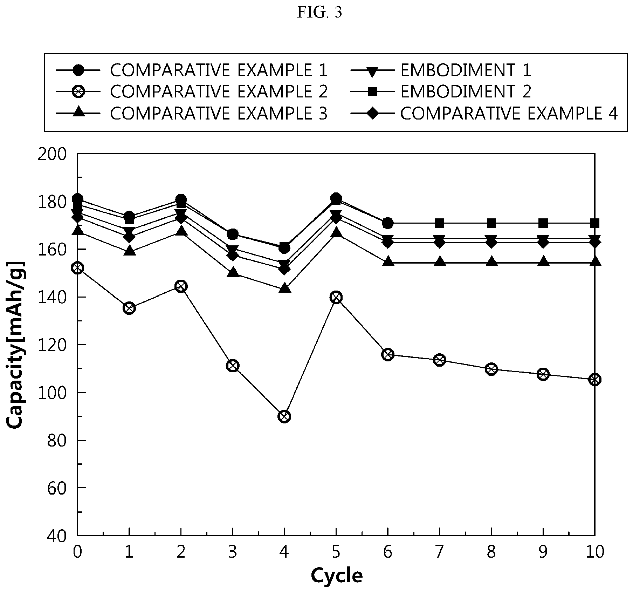

FIG. 3 shows results of cell evaluation using active materials of Embodiments and Comparative Examples. The rate performance was reviewed by evaluating the capacity according to the number of cycle repetitions at different currents. The equipment used for evaluation is a general charging/discharging test apparatus that is well used in the laboratory. There is no deviation according to a measuring apparatus or method. In the graph of FIG. 3, the horizontal axis indicates the number of cycles and the vertical axis indicates the capacity. The voltage was set to 3 to 4.3V, and initial formation charging/discharging was performed at 0.1C/0.1C. An electrolyte constituting the cell that is carbonate-based, has 3:7 of ethylene carbonate (EC) to ethyl methyl carbonate (EMC), and partially includes an additive was used.

In Embodiments 1 and 2, a lithium precursor was added compared to Comparative Examples 2 and 3. It was confirmed that the capacity of the lithium precursor was increased to a level similar to that of Comparative Example 1 by supplementing an amount of lithium lost in a washing process. Although the capacity is reduced as in Comparative Example 2 after a surface modification step by washing, Ni rock salt is reduced through annealing after LiF is removed by surface modification, and the structure of the lithium precursor is restored to a hexagonal crystal, and thus the capacity increases in Embodiments 1 and 2.

In Comparative Example 4, a lithium precursor was added without washing. If washing is not performed, since a material such as LiF remains, and acts as a resistance, the capacity improvement effect is inferior to those of Embodiments 1 and 2 in which washing is performed.

As described above, according to the present disclosure, the active material may be recovered from the positive electrode scrap so as to be directly reused through heat treatment, washing, addition of the lithium precursor, and annealing. It is safe because a toxic and explosive solvent such as NMP, DMC, acetone, and methanol is not used, and it is suitable for mass production because simple and safe methods such as heat treatment, washing, and annealing are used.

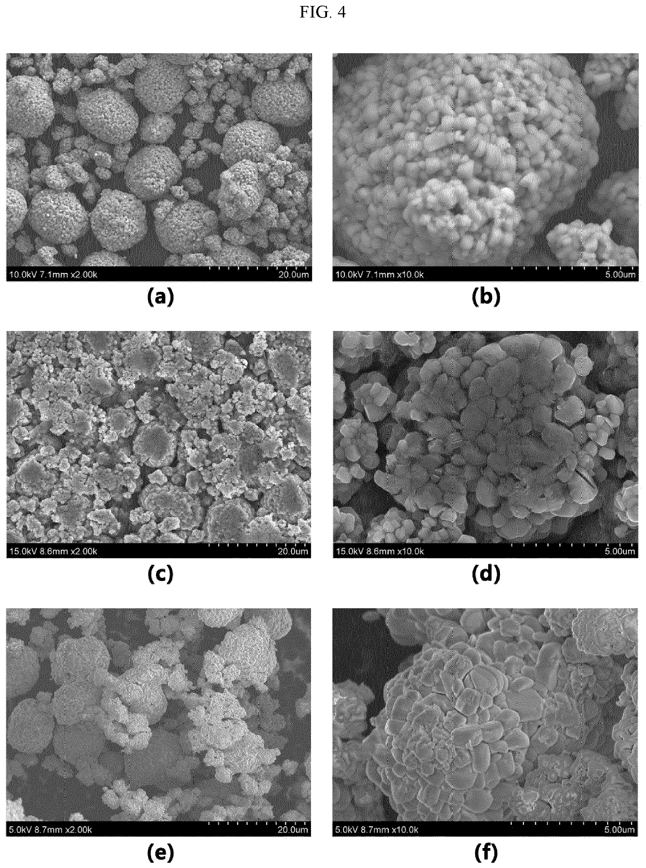

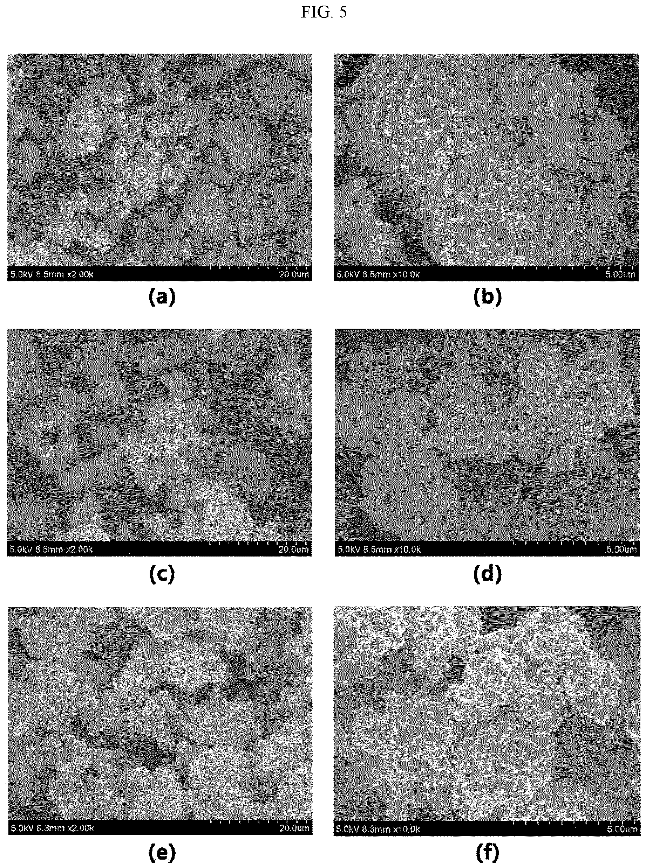

FIGS. 4 and 5 are scanning electron microscope (SEM) pictures of samples and the active materials of an embodiment and comparative examples. The SEM pictures were taken with a general SEM apparatus that is well used in the laboratory. For example, the SEM pictures may be taken using s-4200 of HITACHI. However, there is no deviation according to a measuring apparatus or method.

FIG. 4(a) is a SEM picture of a fresh active material of Sample 1 (or Comparative Example 1), and FIG. 4(b) is an enlarged picture of FIG. 4(a). FIG. 4(c) is a picture of a surface of a positive electrode scrap manufactured with such a fresh active material, and FIG. 4(d) is an enlarged picture of FIG. 4(c). The fresh active material has no particle breakage, but the positive electrode scrap made of an electrode shows that particles on the surface are pressed and broken by a rolling process.

FIG. 4(e) is an SEM picture of Sample 2, and FIG. 4(f) is an enlarged picture of FIG. 4(e). With reference to FIGS. 4(e) and 4(f), no binder or conductive material is observed in the recovered active material. That is, it may be confirmed that a binder or a conductive material are removed during a high temperature heat treatment process. Therefore, it may be seen that the active material is separated from a current collector only by heat treatment in the air, and the binder or the conductive material does not almost remain on the surface of the active material.

FIG. 5(a) is an SEM picture of Sample 5 (Comparative Example 2), and FIG. 5(b) is an enlarged picture of FIG. 5(a). Upon comparing FIGS. 4(c) and 4(d) which are pictures of the positive electrode scrap, it may be seen that particles are released through the process.

FIG. 5(c) is an SEM picture of Comparative Example 3, and FIG. 5(d) is an enlarged picture of FIG. 5(c). FIG. 5(e) is an SEM picture of Embodiment 1, and FIG. 5(f) is an enlarged picture of FIG. 5(e). It may be seen that the particles released in the previous step are aggregated through annealing. Upon comparing FIG. 5(f) with FIG. 4(a), it may be seen that the reuse active material of Embodiment 1 has the same shape as that of the fresh active material.

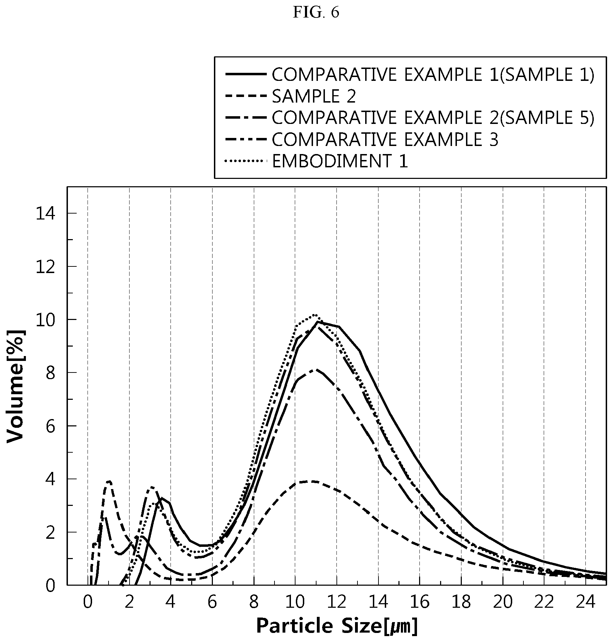

FIG. 6 is a graph of a particle size distribution of the active materials of samples and the active materials of an embodiment and comparative examples. The particle size distribution may be obtained by a general particle size analyzer well used in the laboratory. For example, the particle size distribution may be measured using a Horiba LA 950V2 particle size analyzer. However, there is no deviation according to a measuring apparatus or method. In FIG. 6, the horizontal axis represents particle size (um) and the vertical axis represents volume %.

The particle size distribution results of the graph of FIG. 6 are identical to the SEM results of FIGS. 4 and 5. The NCM-based active material has high particle splitting due to rolling during formation of the electrode, so it may be seen that many small particles are formed in a particle size distribution of Sample 2 after primary heat treatment, and it may be confirmed that there is a distribution of relatively many small particles even in Comparative Example 2 after surface modification. However, when annealing is performed, as seen in the previous SEM results, the aggregation phenomenon of particles is increased so that Comparative Example 3 or Embodiment 1 has a similar particle size distribution to that of Comparative Example 1 which is a fresh active material. In particular, the particle size distribution of Embodiment 1 is more similar to the particle size distribution of Comparative Example 1. It is defined that when the volume % of particles having the same particle size differs only in the range within ±2%, the particle size distribution is similar. As described above, according to the present disclosure, since the particle size distribution of the reusable active material does not differ from that of the fresh active material, the initial characteristics are almost maintained, and it is expected that properties of a battery reusing the active material will be similar to properties of a battery using the fresh active material.

ICP analysis was performed on the positive active materials recovered from or prepared in the Embodiment and Comparative Examples, and an amount of a specific element was also analyzed. The results are shown in Table 5 below.

**[Table 5]**

| | Content of B (mg/kg) | Content of W (mg/kg) |
|---|---|---|
| Comparative Example 1 (Sample 1) | 500 | 3100 |
| Sample 2 | 200 | 2700 |
| Comparative Example 2 (Sample 5) | ND | 200 |
| Comparative Example 3 | ND | 200 |
| Embodiment 1 | ND | 200 |

As shown in Comparative Example 1, the fresh active material used in the present experiment further includes B and W. Sample 2 shows that content of B and W is reduced through heat treatment, and it may be seen from the remaining results that almost B is almost removed in subsequent processes. In the case of W, it may be seen that a large amount of W is removed during the surface modification process through washing as in Comparative Example 2.

Therefore, since according to a type of an initially used active material, a specific element may be lost during the process, and in particular, the specific element may be completely removed or a small amount thereof remains during the surface modification process through washing, there may be a case in which it is difficult to fully recover characteristics by performing only up to the annealing step as in Embodiment 1. In such a case, it is preferable to perform an additional surface coating step as proposed in the present disclosure. The surface coating step is to coat B and W in the case of the present experimental example. Surface coating may act as a surface protective layer of the positive electrode active material. Surface coating may also be a process that supplements a specific insufficient element and at the same time, rebuilds the surface protective layer in the fresh active material. In the case of the fresh active material used in the present experiment, the surface protective layer is made of B-W, and the meaning of loss of lithium during the process is interpreted as a ratio of (lithium of the active material itself + lithium forming the surface protective layer) to other metals, other than the 1:1 ratio of lithium in the active material itself to other metals. Therefore, the molar ratio of 0.09 lost in the above experiment as in Comparative Example 2 may be interpreted as an amount of lithium in which lithium in the positive active material and lithium for forming the surface protective layer are summed.

The surface coating step entails the heat treatment process after the solid or liquid reaction.

When the reusable active material is represented by chemical formula 1 below,

[Chemical Formula 1] LiₐNiₓMn_{y}Co_{z}M_{w}O_{2+δ}

(In Chemical Formula 1, M includes at least one selected from the group consisting of B, W, Al, Ti and Mg, 1<a≤1.1, 0≤x<0.95, 0≤y<0.8, 0≤ z<1.0, 0≤w≤0.1, - 0.02≤δ≤0.02, and x+y+z+w=1).

It may be considered that M in Chemical Formula 1 is supplemented through this surface coating.

When the surface coating layer includes B, B-W, B-Ti, and B-W-Ti, surface coating heat treatment may be performed at a temperature of 200 to 500 °C, and other components may be also coated with a metal component, a carbon component and organic metal components at a temperature within 100 to 1200 °C.

As described above, according to the present disclosure, the positive electrode scrap may be reused using a simple, eco-friendly, and economical method, and even if a lithium secondary battery is manufactured by reusing the NCM-based lithium composite transition metal oxide positive electrode active material prepared as described above, there is no problem in the performance of the battery.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A positive electrode active material reuse method comprising:
(a) by thermally decomposing a binder and a conductive material in an active material layer by performing heat treatment in air on a positive electrode scrap including a lithium composite transition metal oxide positive electrode active material layer on a current collector, separating the current collector from the active material layer and recovering an active material in the active material layer;
(b) washing the recovered active material with a cleaning solution; and
(c) obtaining a reusable active material by adding a lithium precursor to the washed active material and annealing the active material,
wherein a molar ratio of lithium to other metals in the active material after heat treatment or a molar ratio of lithium to other metals in the active material after washing has a decrease range within 20% compared to a molar ratio of lithium to other metals in the positive electrode scrap before heat treatment.

2. The positive electrode active material reuse method of claim 1, further comprising (d) performing surface coating on the annealed active material.

3. The positive electrode active material reuse method of claim 1, wherein heat treatment is performed for 10 minutes to 24 hours at 300 to 650 °C.

4. The positive electrode active material reuse method of claim 1, wherein the cleaning solution is a lithium compound aqueous solution showing basicity in an aqueous solution state, the lithium compound aqueous solution is prepared to contain a lithium compound more than 0% and equal to or less than 15%, and washing is performed within one week.

5. The positive electrode active material reuse method of claim 1, wherein the cleaning solution in which a dissolving amount of LiF is 0.127g/100ml (18 °C) and 0.134g/100ml (25 °C) is used, and a ratio of the active material to the cleaning solution during washing is equal to or less than 1:200.

6. The positive electrode active material reuse method of claim 1, wherein washing is performed by impregnating the recovered active material in the lithium compound aqueous solution and at the same time stirring the recovered active material.

7. The positive electrode active material reuse method of claim 1, wherein the lithium precursor used in annealing includes at least one of LiOH, Li₂CO₃, LiNO₃ and Li₂O.

8. The positive electrode active material reuse method of claim 1, wherein the lithium precursor is added by an amount that is added as much as a ratio of lithium lost compared to a ratio of lithium to other metals in a raw material active material used in the active material layer.

9. The positive electrode active material reuse method of claim 8, wherein the lithium precursor is added by an amount of lithium added at a molar ratio of 0.001 to 0.4.

10. The positive electrode active material reuse method of claim 8, wherein the lithium precursor is added by an amount of lithium that is further added at a molar ratio of 0.0001 to 0.1 with respect to 1:1 that is a molar ratio of lithium to other metals.

11. The positive electrode active material reuse method of claim 1, wherein, without drying after the washing, the lithium precursor is added in step (c) by mixing the washed active material in a lithium precursor solution and spray drying the active material.

12. The positive electrode active material reuse method of claim 11, wherein a temperature of the spray drying is 100 to 300 °C.

13. The positive electrode active material reuse method of claim 1, wherein the annealing is performed at 400 to 1000 °C in air.

14. The positive electrode active material reuse method of claim 1, wherein a temperature of the annealing exceeds a melting point of the lithium precursor.

15. The positive electrode active material reuse method of claim 1, wherein the active material in the active material layer is recovered in powder form, and a carbon component generated by carbonization of the binder or the conductive material does not remain on a surface.

16. The positive electrode active material reuse method of claim 2, wherein the performing of the surface coating includes coating at least one of a metal, an organic metal and a carbon component on a surface in a solid or liquid method and then performing heat treatment at 100 to 1200 °C.

17. The positive electrode active material reuse method of claim 1, wherein the reusable active material is represented by Chemical Formula 1 below,
LiₐNiₓMn_{y}Co_{z}M_{w}O_{2+δ}
(in Chemical Formula 1 above, M includes at least one selected from the group consisting of B, W, Al, Ti and Mg, 1<a≤1.1, 0≤x<0.95, 0≤y<0.8, 0≤ z<1.0, 0≤w≤0.1, - 0.02≤δ≤0.02, and x+y+z+w=1.)

18. The positive electrode active material reuse method of claim 1, wherein the reusable active material includes a content of fluorine (F) equal to or less than 100 ppm.
